# EUROPÄISCHE PATENTANMELDUNG

(11) **EP 4 792 640 A1**
(43) Veröffentlichungstag der Anmeldung: **19.08.2026**
(21) Anmeldenummer: 26151996.1
(22) Anmeldetag: 15.01.2026
(51) Int. Cl.: A01D 75/20

(54) **BEFESTIGUNGSSYSTEM FÜR ZUMINDEST EINEN SENSOR**

(30) Priorität: 12.02.2025 DE 102025105085
(71) Anmelder: CLAAS Saulgau GmbH, 88340 Bad Saulgau (DE)
(72) Erfinder: Rupp, Magnus, 73494 Rosenberg (DE); Mock, Andreas, 88284 Wolpertswende (DE); Fischer, Josef, 88400 Biberach (DE); Speer, Christian, 78267 Aach (DE); Monkenbusch, Robin, 33378 Rheda-Wiedenbrück (DE); Schmitt, Mathias, 78576 Emmingen-Liptingen (DE); Spieler, Raphael, 88339 Bad Waldsee (DE); Frick, Clemens, 88356 Ostrach (DE); Ramm, Lars, 88326 Aulendorf (DE); Ott, Florian, 78567 Fridingen a.D. (DE); Ried, Andreas, 87651 Bidingen (DE); Huber, Jonathan, 79733 Görwihl (DE)
(74) Vertreter: CLAAS Gruppe

(57) **Zusammenfassung**

Die vorliegende Erfindung betrifft ein Befestigungssystem (1) für zumindest einen Sensor (2) zur Befestigung des zumindest einen Sensors (2) an einem Anbaugerät (3) zur Grünfutterernte, wobei das Befestigungssystem (1) ein Traggestell (4) aufweist, das einenends mit dem Anbaugerät (3) verbindbar und an dem andernends der zumindest eine Sensor (2) befestigt ist, wobei das Traggestell (4) ein Tragrahmenelement (5) umfasst, welches mit dem Anbaugerät (3) lösbar gekoppelt ist, sowie zumindest einen Auslegerarm (6, 6A), welcher einenends um eine Schwenkachse (7) schwenkbar an dem Tragrahmenelement (5) angelenkt ist und andernends eine Befestigungsstruktur (8) aufweist, die dazu eingerichtet ist, den zumindest einen Sensor (2) aufzunehmen, wobei der zumindest eine Sensor (2) durch den zumindest einen Auslegerarm (6, 6A) aus einer Transportposition in eine Umfeldüberwachungsposition überführbar ist.

## Beschreibung

Die vorliegende Erfindung betrifft ein Befestigungssystem für zumindest einen Sensor zur Befestigung des Sensors an einem Anbaugerät zur Grünfutterernte. Weiterhin sind ein Anbaugerät gemäß Anspruch 13 sowie eine Kombination gemäß dem Anspruch 14 Gegenstand der vorliegenden Erfindung.

Ein Befestigungssystem für einen Sensor zur Befestigung an einem Anbaugerät zur Grünfutterernte ist aus der EP 3 461 313 A1 bekannt. An einem als Mähwerk ausgeführten Anbaugerät ist eine Sensoreinrichtung mit einem Sensor zur Erfassung der Beschaffenheit eines Feldbestands im Vorfeld des Anbaugerätes angeordnet. Das Mähwerk ist im Heckbereich eines das Mähwerk tragenden und antreibenden Traktors befestigt. Die Sensorvorrichtung ist an einem Traggestell auf der Oberseite des Anbaugerätes angeordnet. Der auf den Boden gerichtete Erfassungsbereich des Sensors ist dabei auf den einsehbaren Bereich zwischen den Reifen bzw. unterhalb des Traktors und dem Anbaugerät beschränkt. Über die weitere Ausgestaltung des Befestigungssystems zur Anordnung der Sensoreinrichtung am Anbaugerät sind der EP 3 461 313 A1 keine Details zu entnehmen.

Das aus der EP 3 461 313 A1 bekannte Befestigungssystem sowie die daraus resultierende Anordnung und Positionierung der Sensoreinrichtung am Anbaugerät zur Grünfutterernte eignet sich nicht zu einer Umfeldüberwachung einer Kombination aus einer landwirtschaftlichen Arbeitsmaschine und zumindest einem daran angeordneten Anbaugerät zur Grünfutterernte, um bei einer insbesondere autonom betriebenen Kombination Gefahrenquellen oder Hindernisse zu detektieren.

Ausgehend vom vorstehend genannten Stand der Technik liegt der Erfindung die Aufgabe zugrunde, ein Befestigungssystem der eingangs genannten Art bereitzustellen, welche eine Anordnung zumindest eines Sensors an einem an der landwirtschaftlichen Arbeitsmaschine angeordneten Anbaugerät zur Grünfutterernte ermöglicht, mit dem eine Umfeldüberwachung ohne tote Winkel im Umfeld der Kombination gewährleistet werden kann.

Diese Aufgabe wird durch ein Befestigungssystem für zumindest einen Sensor mit den Merkmalen des Anspruches 1 gelöst. Weiterhin wird die Aufgabe durch ein Anbaugerät mit den Merkmalen des Anspruches 13 sowie eine Kombination aus einer landwirtschaftlichen Arbeitsmaschine und zumindest einem daran angeordneten Anbaugerät zur Grünfutterernte mit den Merkmalen des Anspruches 14 gelöst. Vorteilhafte Weiterbildungen sind Gegenstand der Unteransprüche.

Gemäß dem Anspruch 1 wird ein Befestigungssystem für zumindest einen Sensor zur Befestigung des zumindest einen Sensors an einem Anbaugerät zur Grünfutterernte, insbesondere Mähwerk, vorgeschlagen, wobei das Befestigungssystem ein Traggestell aufweist, das einenends mit dem Anbaugerät verbindbar und an dem andernends der zumindest eine Sensor befestigt ist. Erfindungsgemäß ist vorgesehen, dass das Traggestell ein Tragrahmenelement umfasst, welches mit dem Anbaugerät lösbar gekoppelt ist, sowie zumindest einen Auslegerarm, welcher einenends um eine Schwenkachse schwenkbar an dem Tragrahmenelement angelenkt ist und andernends eine Befestigungsstruktur aufweist, die dazu eingerichtet ist, den zumindest einen Sensor aufzunehmen, wobei der zumindest eine Sensor durch den zumindest einen Auslegerarm aus einer Transportposition in eine Umfeldüberwachungsposition überführbar ist.

Das erfindungsgemäße Befestigungssystem ermöglicht die Anordnung des zumindest einen Sensors an dem Anbaugerät für die Grünfutterernte, insbesondere einem Mähwerk. Dabei steht die, insbesondere nachträgliche, Anordnung des Befestigungssystems an dem Anbaugerät im Vordergrund, wobei auf konstruktive Änderungen am bestehenden Anbaugerät verzichtet werden soll und kann. Hierzu umfasst das Traggestell das Tragrahmenelement, welches mit dem Anbaugerät lösbar gekoppelt ist. Die Schwenkbarkeit des zumindest einen Auslegerarms ermöglicht es, den zumindest einen Sensor aus der Transportposition in die Umfeldüberwachungsposition zu überführen, um die Umgebung hinsichtlich des Auftretens von Gefahrenquellen oder Hindernisse zu überwachen. In der Umfeldüberwachungsposition befindet sich der zumindest eine Auslegerarm in einer im Wesentlichen vertikal aufgerichteten Position. In der Transportposition befindet sich der zumindest eine Auslegerarm in einer am Anbaugerät anliegenden oder aufliegenden Position.

Der zumindest eine Schwenkarm besteht aus Metall und ist bevorzugt in Leichtbauweise gefertigt.

Bevorzugt kann der zumindest eine Auslegerarm durch einen am Tragrahmenelement und an dem Auslegerarm angeordneten Linearaktor um die Schwenkachse verschwenkbar sein. Der Linearaktor kann dabei durch eine dem Befestigungssystem zugeordnete Steuerungsvorrichtung angesteuert werden.

Dabei kann der zumindest eine Auslegerarm durch den Linearaktor aus der Transportposition in die Umfeldüberwachungsposition und vice versa überführbar sein.

Insbesondere kann die Befestigungsstruktur ein am Ende des zumindest einen Auslegerarms angeordnetes erstes Haltelement aufweisen, an welchem ein zweites Halteelement lösbar angeordnet ist, welches der Aufnahme des zumindest einen Sensors dient. Das zweite Haltelement kann beispielsweise mittels einer Schraubenverbindung mit dem ersten Haltelement verbunden sein. Hierdurch kann die Montage und Demontage des zumindest einen Sensors vereinfacht werden.

Hierbei kann das erste Halteelement relativ zum zumindest einen Auslegerarm in horizontaler Richtung verschwenkbar ausgeführt sein und das zweite Halteelement relativ zum ersten Halteelement in vertikaler Richtung verschwenkbar ausgeführt sein. Die Verschwenkbarkeit des ersten Halteelementes relativ zu dem zumindest einen Auslegerarm ermöglicht es, das zweite Halteelement und den daran angeordneten zumindest einen Sensor um eine vertikale Achse zu schwenken. Die in vertikaler Richtung verschwenkbare Ausführung des zweiten Halteelementes relativ zum ersten Halteelement ermöglicht es, den Neigungswinkel des zumindest einen Sensors zu verstellen.

Gemäß einer Weiterbildung kann an dem zweiten Halteelement ein den daran befestigten Sensor umgebenes, im Wesentlichen trichterförmiges Schutzelement angeordnet sein. Das Schutzelement kann dazu dienen, den zumindest einen Sensor vor leichten Verschmutzungen, wie Staub oder dergleichen, zu schützen. In Abhängigkeit von der verwendeten Sensortechnologie kann das Schutzelement eine den zumindest einen Sensor vor direkter Sonnenlichteinstrahlung schützen.

Insbesondere kann am Fuß des Schutzelementes eine Öffnung ausgebildet sein, in welche eine Düse einsetzbar ist, welche mit einer Druckluftquelle verbindbar ist. Mittels der Düse kann ein auf die Oberfläche gerichteter oder ein die Oberfläche überströmender Luftstrom der Reinigung des in dem zweiten Halteelement angeordneten Sensors dienen.

Bevorzugt kann das Tragrahmenelement als eine im Wesentlichen dreieckförmige Konsole ausgebildet sein, welche zumindest zwei Befestigungspunkte zur Anordnung am Anbaugerät und einen Gelenkpunkt zur Anlenkung des zumindest einen Auslegerarms aufweist. Insbesondere kann die im Wesentlichen dreieckförmige Konsole in Leichtbauweise ausgeführt sein. So kann die im Wesentlichen dreieckförmige Konsole zwei zueinander parallel angeordnete plattenförmige Gleichteile aufweisen, die durch in den Befestigungspunkten angeordnete Bolzen sowie eine im Gelenkpunkt angeordnete Achse zueinander beabstandet sind. Bevorzugt besteht die Konsole aus Metall.

Weiter bevorzugt kann der zumindest eine Auslegerarm zweiteilig ausgebildet sein, wobei ein unterer Teil und ein oberer Teil durch ein Knickgelenk miteinander verbunden sind. Das Vorsehen eines Knickgelenks ermöglicht es, den zumindest einen Auslegerarm länger auszuführen als einen einteiligen Auslegerarm, wobei durch das Knickgelenk zugleich das Überführen des zumindest einen zweiteiligen Auslegerarms in die Transportposition gewährleistet ist.

Insbesondere kann der untere Teil des zumindest einen Auslegerarms durch einen weiteren Linearaktor mit dem oberen Teil kinematisch gekoppelt sein. Durch den einen weiteren Linearaktor kann der obere Teil mittels des Knickgelenks in eine zum unteren Teil im Wesentliche parallele Stellung überführt werden. Dies dient dazu, dass der zumindest eine zweiteilige Auslegerarm die Transportposition einnehmen kann.

Weiterhin können am freien Ende des zweiten Teils des zumindest einen Auslegerarms zwei Sensoren angeordnet sein. Die zumindest zwei Sensoren sind jeweils mittels des ersten Halteelements und des zweiten Halteelements, die bevorzugt gemäß einem der Ansprüche 4 bis 6 ausgeführt sind, am freien Ende des zweiten Teils des zumindest einen Auslegerarms angeordnet. Dabei kann bevorzugt vorgesehen sein, dass die beiden Sensoren um 180° versetzt zueinander am freien Ende des zweiten Teils des zumindest einen Auslegerarms angeordnet sind. Dadurch wird erreicht, dass der eine Sensor mit seinem Erfassungsbereich im Wesentlichen in Bewegungsrichtung des Anbaugerätes und der Erfassungsbereich des anderen Sensors im Wesentlichen entgegen der Bewegungsrichtung ausgerichtet ist.

Des Weiteren kann das Tragrahmenelement als eine im Wesentlichen U-förmige Konsole ausgebildet sein, wobei zwei zweiteilige Auslegerarme einander gegenüberliegend an der Konsole angelenkt sind und durch jeweils ein Dämpfungselement mit der im Wesentlichen U-förmigen Konsole verbunden sind. Mittels der Dämpfungselemente lassen sich Schwingungen, die im laufenden Betrieb des Anbaugerätes auf das Befestigungssystem respektive die beiden zweiteiligen Auslegerarme übertragen werden, dämpfen. Dadurch wird die Qualität der sensorischen Erfassung durch die jeweils zwei Sensoren an jedem der beiden zweiteiligen Auslegerarme gewährleistet.

Eine bevorzugte Weiterbildung sieht vor, dass an der im Wesentlichen U-förmige Konsole am querverlaufenden Konsolenabschnitt eine Steuereinheit angeordnet ist. Die Steuereinheit kann auf ihrer Außenseite mit Kühlrippen ausgeführt sein, die eine passive Kühlung der Steuereinheit ermöglichen. Die Steuereinheit kann mit dem zumindest einen Sensor an dem zumindest einen Auslegerarmen signaltechnisch verbunden sein. Die Kommunikation des zumindest einen Sensors mit der Steuereinheit kann drahtgebunden und/oder drahtlos erfolgen.

Der querverlaufende Konsolenabschnitt kann einen Hohlraum aufweisen. Im Inneren des Konsolenabschnitts kann eine Kommunikationseinheit angeordnet sein. Zum Schutz der Kommunikationseinheit vor äußeren Einflüssen ist der Hohlraum durch ein Abdeckblech verschlossen, welches lösbar an dem Konsolenabschnitt befestigt ist. Zudem kann in dem Hohlraum eine Spannungsverteileinrichtung angeordnet sein, welche die Steuereinheit und/oder den zumindest einen Sensor mit Strom versorgt.

Die eingangs gestellte Aufgabe wird gemäß dem Anspruch 13 durch ein Anbaugerät gelöst, welches zur Grünfutterernte eingerichtet ist, wobei mittels eines Befestigungssystems zumindest ein Sensor an dem Anbaugerät befestigt ist, wobei das Befestigungssystem nach einem der Ansprüche 1 bis 12 ausgeführt ist. Auf die erfindungsgemäßen Ausführungen zum Befestigungssystem darf verwiesen werden.

Weiterhin wird eine Kombination aus einer landwirtschaftlichen Arbeitsmaschine und zumindest einem daran angeordneten Anbaugerät zur Grünfutterernte mit den Merkmalen des Anspruches 14 beansprucht, wonach jedem Anbaugerät zumindest ein Sensor zur Erfassung der Umgebung der Kombination zugeordnet ist, wobei der zumindest eine Sensor durch zumindest ein nach einem der Ansprüche 1 bis 12 ausgeführtes Befestigungssystem an dem jeweiligen Anbaugerät befestigt ist. Auf die erfindungsgemäßen Ausführungen zum Befestigungssystem darf verwiesen werden.

Gemäß einer Weiterbildung kann an der Arbeitsmaschine ein Anbaugerät frontseitig und ein Anbaugerät heckseitig angeordnet sein, wobei an dem frontseitigen Anbaugerät ein Sensor mittels des Befestigungssystems angeordnet ist und an dem heckseitigen Anbaugerät zumindest zwei Sensoren mittels eines weiteren Befestigungssystems angeordnet sind.

Bevorzugt kann die landwirtschaftliche Arbeitsmaschine als eine autonome oder autonom betreibbare Arbeitsmaschine ausgeführt sein. Bei einer autonomen Arbeitsmaschine wird im Allgemeinen auf eine Kabine für eine Bedienperson verzichtet, was jedoch das Bewegen auf öffentlichen Verkehrswegen ausschließt. Eine autonom betreibbare Arbeitsmaschine, beispielsweise ein Traktor, weist eine Kabine für die Bedienperson auf, damit diese den Traktor auf öffentlichen Verkehrswegen bewegen darf.

Die vorliegende Erfindung wird nachstehend anhand von in den Zeichnungen dargestellten Ausführungsbeispielen, in welchen identische Bezugszeichen gleiche oder ähnliche Bauteile bezeichnen, näher erläutert.

### Es zeigen:

- Fig. 1: schematisch eine perspektivische Ansicht eines Befestigungssystems für zumindest einen Sensor zur Befestigung des Sensors an einem Anbaugerät zur Grünfutterernte;
- Fig. 2: schematisch eine perspektivische Ansicht des Befestigungssystems in Transportposition;
- Fig. 3: schematisch eine Explosionsansicht des Befestigungssystems gemäß einer weiteren Ausführungsform;
- Fig. 4: a) eine Detailansicht von an einem freien Ende eines Auslegerarmes angeordneten Sensoren, b) eine Detailansicht eines als eine im Wesentlichen U-förmige Konsole ausgeführten Tragrahmenelementes; c) eine Detailansicht eines zwei Teile eines zweiteiligen Auslegerarmes verbindenden Knickgelenks; und
- Fig. 5: schematisch eine perspektivische Ansicht des an dem Anbaugerät angeordneten Befestigungssystems gemäß Fig. 3.

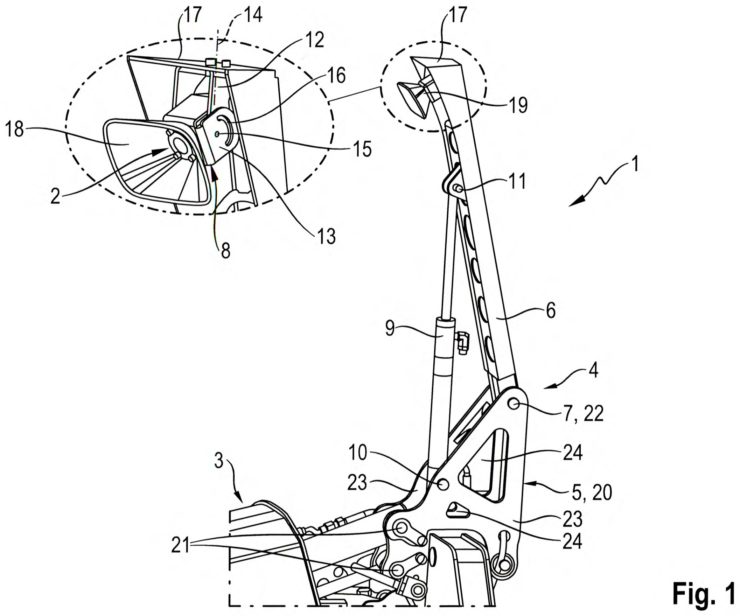

Die Darstellung in Fig. 1 zeigt schematisch eine perspektivische Ansicht eines Befestigungssystems 1 für zumindest einen Sensor 2 zur Befestigung des Sensors 2 an einem Anbaugerät 3 zur Grünfutterernte. Das in Fig. 1 angedeutete Anbaugerät 3 ist als Fronmähwerk einer Arbeitsmaschine, insbesondere eines Traktors, ausgeführt. Das Befestigungssystem 1 weist ein Traggestell 4 auf, das einenends mit dem Anbaugerät 3 verbindbar und an dem andernends der zumindest ein Sensor 2 befestigt ist.

Das Traggestell 4 umfasst ein Tragrahmenelement 5. Das Tragrahmenelement 5 ist mit dem Anbaugerät 3 lösbar gekoppelt. Weiterhin umfasst das Traggestell 4 zumindest einen Auslegerarm 6. Der Auslegerarm 6 ist einenends um eine Schwenkachse 7 schwenkbar an dem Tragrahmenelement 5 angelenkt. Der zumindest eine Auslegerarm 6 weist andernends eine Befestigungsstruktur 8 auf. Die Befestigungsstruktur 8 ist dazu eingerichtet und ausgeführt, den zumindest einen Sensor 2 aufzunehmen. Der zumindest eine Sensor 2 ist durch den zumindest einen Auslegerarm 6 aus einer Transportposition in eine in Fig. 1 dargestellte Umfeldüberwachungsposition überführbar.

Der zumindest eine Auslegerarm 6 ist durch einen am Tragrahmenelement 5 und an dem zumindest einen Auslegerarm 6 angeordneten Linearaktor 9 um die Schwenkachse 7 verschwenkbar. Hierzu ist der Linearaktor 9 an dem Tragrahmenelement 5 um eine Achse 10 und an dem zumindest einen Auslegerarm 6 um eine Achse 11 schwenkbar angelenkt. Der Linearaktor 9 ist hier und vorzugsweise als Hydraulikzylinder, insbesondere als doppeltwirkender Hydraulikzylinder, ausgeführt. Der zumindest eine Auslegerarm 6 ist durch den Linearaktor 9 aus der Transportposition in die Umfeldüberwachungsposition und vice versa überführbar. In der Umfeldüberwachungsposition befindet sich der zumindest eine Auslegerarm 6 in einer im Wesentlichen vertikal aufgerichteten Position. Der zumindest eine Sensor 2 kann in der Umfeldüberwachungsposition des Auslegerarms 6 im Bereich vor dem Anbaugerät 3 befindliche Objekte detektieren.

Die Befestigungsstruktur 8 weist ein am Ende des zumindest einen Auslegerarms 6 angeordnetes erstes Haltelement 12 auf. An dem ersten Halteelement 12 ist ein zweites Halteelement 13 lösbar angeordnet, welches der Aufnahme des zumindest einen Sensors 2 dient. Das erste Halteelement 12 und das zweite Halteelement 13 sind als im Wesentlichen U-förmige Profilteile ausgeführt.

Das erste Halteelement 12 ist relativ zum zumindest einen Auslegerarm 6 in horizontaler Richtung verschwenkbar. Hierzu ist das erste Halteelement 12 um eine Vertikalachse 14 relativ zum zumindest einen Auslegerarm 6 schwenkbar. Die Vertikalachse 14 ist am das erste Halteelement 12 übergreifenden Abschnitt 17 des freien Endes des zumindest einen Auslegerarms 6 gelagert. Der Schwenkweg des ersten Halteelementes 12 um die Vertikalachse 14 kann durch ein bogenförmiges Langloch auf der horizontal verlaufenden Oberseite des ersten Halteelementes 12 begrenzt sein.

Das zweite Halteelement 13 ist relativ zum ersten Halteelement 12 in vertikaler Richtung verschwenkbar. Hierzu ist das zweite Halteelement 13 um eine Horizontalachse 15 relativ ersten Halteelement 12 schwenkbar. Der Schwenkweg des zweiten Halteelementes 13 um die Horizontalachse 15 kann ebenfalls durch bogenförmige Langlöcher 16 in den zueinander parallelen Schenkeln des zweiten Halteelementes 13, zwischen den der zumindest eine Sensor 2 angeordnet ist, begrenzt sein.

Zumindest ein am das erste Halteelement 12 übergreifenden Abschnitt 17 bzw. am zweiten Halteelement 13 angeordneter Bolzen greift in das jeweilige Langloch ein und wird in diesem geführt.

An dem zweiten Halteelement 13 ist ein den daran befestigten Sensor 2 umgebenes, im Wesentlichen trichterförmiges Schutzelement 18 angeordnet. Das Schutzelement 18 kann dazu dienen, den zumindest einen Sensor 2 vor leichten Verschmutzungen, wie Staub oder dergleichen, zu schützen. In Abhängigkeit von der verwendeten Sensortechnologie kann das Schutzelement 18 eine den zumindest einen Sensor 2 vor direkter Sonnenlichteinstrahlung schützen. Bei einer bevorzugten Ausführung des zumindest einen Sensors 2 als optischer Sensor schützt das trichterförmige Schutzelement 18 vor direkter Sonneneinstrahlung, um Bildkontraste zu verbessern.

Des Weiteren kann am Fuß 19 des Schutzelementes 18 eine - nicht dargestellte - Öffnung ausgebildet sein, in welche eine Düse einsetzbar ist, welche mit einer Druckluftquelle verbindbar ist. Mit Fuß 19 des Schutzelementes 18 ist der Abschnitt des Schutzelementes 18 bezeichnet, mit dem das Schutzelement 18 am zweiten Halteelement 13 befestigt ist und welcher unmittelbar zum zumindest einen Sensor 2 benachbart ist.

Das Tragrahmenelement 5 ist als eine im Wesentlichen dreieckförmige Konsole 20 ausgebildet. Die Konsole 20 weist zumindest zwei Befestigungspunkte 21 zur Anordnung am Anbaugerät 3 und einen Gelenkpunkt 22 zur Anlenkung des zumindest einen Auslegerarms 6 auf. Im Gelenkpunkt 22 ist die Schwenkachse 7 angeordnet. Die Schwenkachse 7 kann als Bolzen oder Stift ausgeführt sein, welcher sich im Gelenkpunkt 22 durch eine am zumindest einen Auslegerarm 6 angeordnete Buchse erstreckt.

Insbesondere kann die im Wesentlichen dreieckförmige Konsole 20 in Leichtbauweise ausgeführt sein. So kann die im Wesentlichen dreieckförmige Konsole 20 zwei zueinander parallel angeordnete plattenförmige Gleichteile 23 mit im Wesentlichen dreieckförmiger Kontur aufweisen, die durch in den Befestigungspunkten 21 angeordnete Bolzen sowie die im Gelenkpunkt 22 angeordnete Schwenkachse 7 zueinander beabstandet sind. Bevorzugt bestehen die Konsole 20 sowie der zumindest eine Auslegerarm 6 aus Metall. Die plattenförmigen Gleichteile 23 der Konsole 20 können mit Ausnehmungen 24 versehen sein, um das Gewicht zu reduzieren.

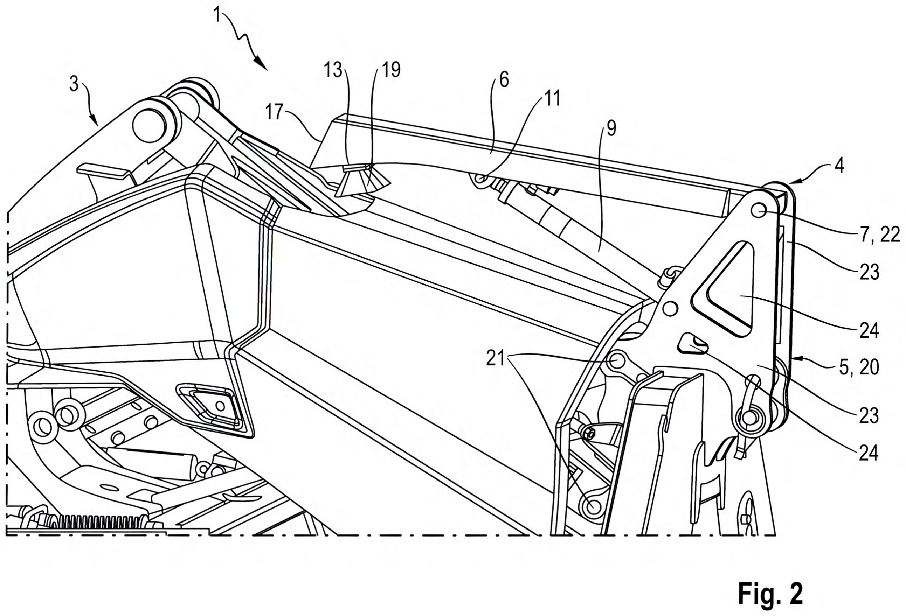

In Fig. 2 ist schematisch eine perspektivische Ansicht des Befestigungssystems 1 in seiner Transportposition dargestellt. In der Transportposition befindet sich der zumindest eine Auslegerarm 6 in einer zum Anbaugerät 3 im Wesentlichen parallelen Position. Dadurch ist bei einer frontseitigen Anordnung des Anbaugerätes 3 an der landwirtschaftlichen Arbeitsmaschine und der Befestigung des zumindest einen Sensors 2 am Anbaugerät 3 durch das Befestigungssystem 1 gewährleistet, dass bei einer Straßenfahrt das Sichtfeld aus der Kabine der Arbeitsmaschine keine Einschränkung erfährt.

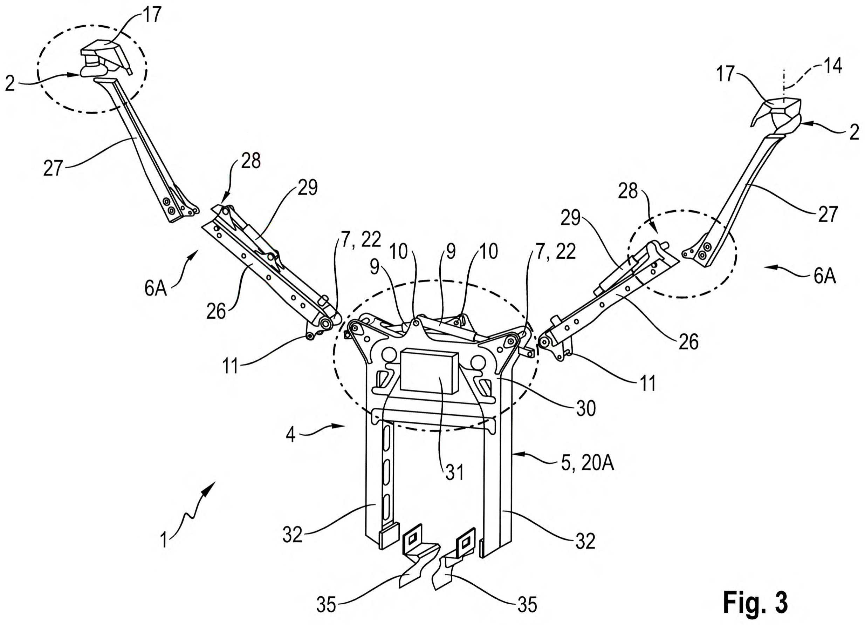

Die Darstellung in Fig. 3 zeigt schematisch eine Explosionsansicht des Befestigungssystems 1 gemäß einer weiteren Ausführungsform. Elemente, welche jenen aus Fig. 1 und 2 entsprechen, sind mit identischen Bezugszeichen gekennzeichnet.

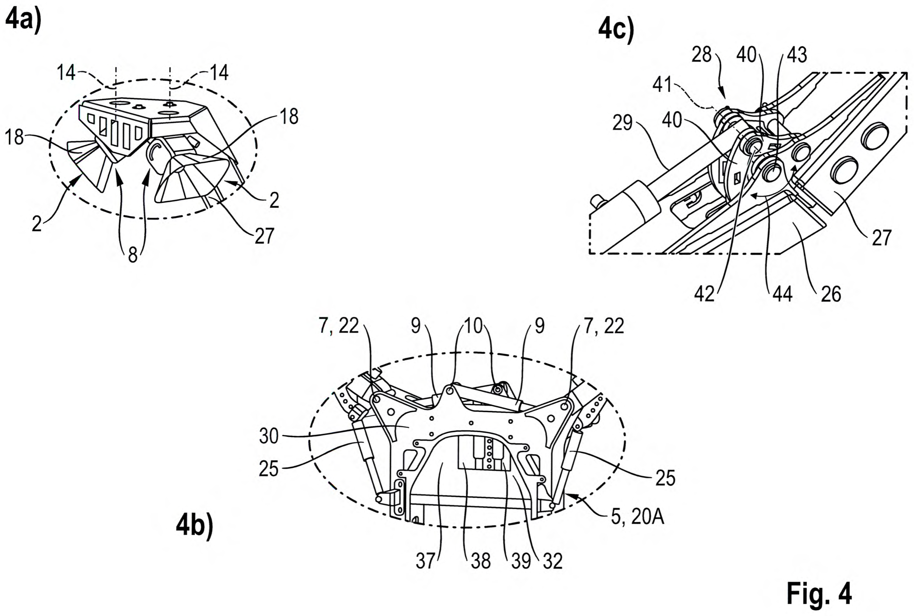

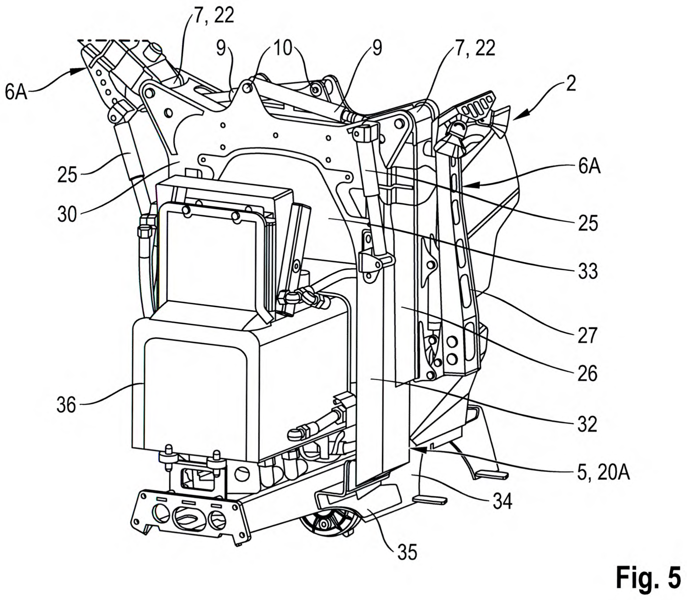

Das Tragrahmenelement 5 ist gemäß dieser Ausführungsform als eine im Wesentlichen U-förmige Konsole 20A ausgebildet ist, an der zumindest ein zweiteilig ausgeführter Auslegerarm 6A angeordnet ist. Hier und vorzugsweise sind zwei zweiteilige Auslegerarme 6A einander gegenüberliegend an der Konsole 20a angelenkt. Der jeweilige Auslegerarm 6A ist durch jeweils ein Dämpfungselement 25 mit der Konsole 20A verbunden, wie in Fig. 4 und 5 näher dargestellt.

Jedem zweiteilig ausgeführten Auslegerarm 6A ist jeweils ein Linearaktor 9 zugeordnet. Mittels des jeweiligen Linearaktors 9 sind die zweiteilig ausgeführten Auslegerarme 6A mit dem Tragrahmenelement 5 um die Achse 10 verschwenkbar. Hierzu ist der Linearaktor 9 an dem Tragrahmenelement 5 um die Achse 10 und an dem jeweiligen Auslegerarm 6A um die Achse 11 schwenkbar angelenkt.

Der zumindest eine zweiteilig ausgebildete Auslegerarm 6A weist einen unteren Teil 26 und einen oberer Teil 27 auf. Der untere Teil 26 und der obere Teil 27 sind durch ein Knickgelenk 28 miteinander verbunden. Der untere Teil 26 des zumindest einen Auslegerarms 6A ist durch einen weiteren Linearaktor 29 mit dem oberen Teil 27 kinematisch gekoppelt. Durch den einen weiteren Linearaktor 29 kann der obere Teil 27 mittels des Knickgelenks 28 in eine zum unteren Teil 26 im Wesentliche parallele Stellung überführt werden. Dies dient dazu, dass der zumindest eine zweiteilige Auslegerarm 6A die Transportposition einnehmen kann, wie in Fig. 5 anhand eines der beiden Auslegerarme 6A dargestellt.

In Fig. 4a) ist eine Detailansicht von am freien Ende eines der zweiteiligen Auslegerarme 6A angeordneten Sensoren 2 dargestellt. Die beiden Sensoren 2 sind jeweils mittels der weiter oben bereits erläuterten Befestigungsstruktur 8 am freien Ende des zweiteiligen Auslegerarmes 6A angeordnet. Hier und vorzugsweise sind die beiden Sensoren 2 um 180° versetzt zueinander am freien Ende des oberen Teils 27 des zumindest einen Auslegerarms 6A angeordnet. Dadurch wird erreicht, dass der eine Sensor 2 mit seinem Erfassungsbereich im Wesentlichen in Bewegungsrichtung des Anbaugerätes 3 und der Erfassungsbereich des anderen Sensors 2 im Wesentlichen entgegen der Bewegungsrichtung ausgerichtet ist.

In Fig. 4b) ist eine Detailansicht des als eine im Wesentlichen U-förmige Konsole 20A ausgeführten Tragrahmenelementes 5 dargestellt.

An der im Wesentlichen U-förmigen Konsole 20A kann am querverlaufenden Konsolenabschnitt 30 eine Steuereinheit 31 angeordnet sein. Die Steuereinheit 31 kann auf ihrer Außenseite mit Kühlrippen ausgeführt sein, die eine passive Kühlung der Steuereinheit 31 ermöglichen. Die Steuereinheit 31 kann mit dem zumindest einen Sensor 2 an dem zumindest einen Auslegerarmen 6A signaltechnisch verbunden sein. Die Kommunikation des zumindest einen Sensors 2 mit der Steuereinheit 31 kann drahtgebunden und/oder drahtlos erfolgen.

Die im Wesentlichen U-förmige Konsole 20A weist zwei zueinander parallele Konsolenschenkel 32 auf, die an dem querverlaufenden Konsolenabschnitt 30 angeordnet sind. Die Konsolenschenkel 32 erstrecken sich in vertikaler Richtung nach unten, wie in Fig. 5 dargestellt. Zur Befestigung der Konsole 20A an einem Rahmenteil 34 des Anbaugerätes 3 sind an den freien Enden der Konsolenschenkel 32 Winkelbleche 35 angeordnet. Durch die Anpassung der beiden Winkelbleche 35 kann das gesamte Befestigungssystem 1 in Längsrichtung des Rahmenteils 34 vor- oder zurückverschoben werden, um bei Bedarf eine Justierung der durch das Tragrahmenelement 5 vorgegebenen Position des zumindest einen Sensors 2 vorzunehmen. Im in Fig. 5 dargestellten Ausführungsbeispiel ist das Tragrahmenelement 5 respektive die U-förmige Konsole derart dimensioniert, dass diese außen am auf dem Rahmenteil 34 des Anbaugerätes 3 angeordneten Ölkühler 36 in Längsrichtung vorbeibewegbar ist.

Der querverlaufende Konsolenabschnitt 30 kann einen Hohlraum 37 aufweisen, wie in der Detailansicht gemäß Fig. 4b) dargestellt. Im Inneren des Hohlraums 37 des Konsolenabschnitt 30 kann eine Kommunikationseinheit 38 angeordnet sein. Zum Schutz der Kommunikationseinheit 38 vor äußeren Einflüssen ist der Hohlraum 37 durch ein Abdeckblech 33 verschlossen, wie in Fig. 5 dargestellt. Das Abdeckblech 33 ist lösbar an dem Konsolenabschnitt 30 befestigt ist. Zudem kann in dem Hohlraum 37 eine Spannungsverteileinrichtung 39 angeordnet sein, welche die Steuereinheit 31 und/oder den zumindest einen Sensor 2 an dem zumindest Auslegerarm 6A mit Strom versorgt.

In Fig. 4c) ist eine Detailansicht die zwei Teile 26, 27 des zweiteiligen Auslegerarmes 6A verbindenden Knickgelenks 28 dargestellt. Der Auslegerarm 6a ist in der Umfeldüberwachungsposition der beiden Sensoren 2 gemäß Fig. 4a) dargestellt. Für die Klappkinematik des zweiten Teils des Auslegerarms 6A ist der zusätzlich Linearaktor 29, welcher bevorzugt ebenfalls als doppeltwirkender Hydraulikzylinder ausgeführt sein kann, erforderlich, um ausgehend von der Umfeldüberwachungsposition die Transportstellung einzunehmen. Diese Klappkinematik, die in Fig. 4c) perspektivisch dargestellt ist, erfolgt mittels zweier kurzer Hebelpaare 40, um die Hublänge des Linearaktors 29 respektive Hydraulikzylinders möglichst kurz zu halten. Dies trägt zur Reduzierung der Größe und des Gewichts des Linearaktors 29 bei. Jeweils ein Hebelpaar 40 ist an dem unteren Teil 26 angelenkt und das andere Hebelpaar ist an dem oberen Teil 27 angelenkt. Die freien Enden der Hebelpaare 40 sind mit dem freien Ende des Linearaktors 29 durch einen Bolzen 41 verbunden, welcher eine Drehachse 42 bildet, um welche such die beiden Hebelpaare 40 relativ zueinander auf einer gekrümmten Bahn bewegen können. Der obere Teil 27 des Auslegerarms 6A kann um eine Schwenkachse 43 in Richtung des unteren Teils 26 oder von diesem weg bewegt werden, wie durch eine Pfeil 44 angedeutet. um diesen in seine am unteren Teil 26 im Wesentlichen parallel anliegende Stellung zu überführen, wie in Fig. 5 dargestellt.

**Bezugszeichenliste**

| | | | |
|---|---|---|---|
| 1 | Befestigungssystem | 32 | Konsolenschenkel |
| 2 | Sensor | 33 | Abdeckblech |
| 3 | Anbaugerät | 34 | Rahmenteil |
| 4 | Traggestell | 35 | Winkelblech |
| 5 | Tragrahmenelement | 36 | Ölkühler |
| 6 | Auslegerarm | 37 | Hohlraum |
| 6A | Auslegerarm | 38 | Kommunikationseinheit |
| 7 | Schwenkachse | 39 | Spannungsverteileinrichtung |
| 8 | Befestigungsstruktur | 40 | Hebelpaar |
| 9 | Linearaktor | 41 | Bolzen |
| 10 | Achse | 42 | Drehachse |
| 11 | Achse | 43 | Schwenkachse |
| 12 | Erstes Halteelement | 44 | Pfeil |
| 13 | Zweites Halteelement | | |
| 14 | Vertikalachse | | |
| 15 | Horizontalachse | | |
| 16 | Langloch | | |
| 17 | Abschnitt | | |
| 18 | Schutzelement | | |
| 19 | Fuß | | |
| 20 | Konsole | | |
| 20A | Konsole | | |
| 21 | Befestigungspunkt | | |
| 22 | Gelenkpunkt | | |
| 23 | Gleichteil | | |
| 24 | Ausnehmung | | |
| 25 | Dämpfungselement | | |
| 26 | Unterer Teil | | |
| 27 | Oberer Teil | | |
| 28 | Knickgelenk | | |
| 29 | Linearaktor | | |
| 30 | Konsolenabschnitt | | |
| 31 | Steuereinheit | | |

## Patentansprüche

1. Befestigungssystem (1) für zumindest einen Sensor (2) zur Befestigung des zumindest einen Sensors (2) an einem Anbaugerät (3) zur Grünfutterernte, wobei das Befestigungssystem (1) ein Traggestell (4) aufweist, das einenends mit dem Anbaugerät (3) verbindbar und an dem andernends der zumindest eine Sensor (2) befestigt ist, **dadurch gekennzeichnet, dass** das Traggestell (4) ein Tragrahmenelement (5) umfasst, welches mit dem Anbaugerät (3) lösbar gekoppelt ist, sowie zumindest einen Auslegerarm (6, 6A), welcher einenends um eine Schwenkachse (7) schwenkbar an dem Tragrahmenelement (5) angelenkt ist und andernends eine Befestigungsstruktur (8) aufweist, die dazu eingerichtet ist, den zumindest einen Sensor (2) aufzunehmen, wobei der zumindest eine Sensor (2) durch den zumindest einen Auslegerarm (6, 6A) aus einer Transportposition in eine Umfeldüberwachungsposition überführbar ist.

2. Befestigungssystem (1) nach Anspruch 1, **dadurch gekennzeichnet, dass** der zumindest eine Auslegerarm (6, 6A) durch einen am Tragrahmenelement (5) und an dem Auslegerarm (6, 6A) angeordneten Linearaktor (9) um die Schwenkachse (7) verschwenkbar ist.

3. Befestigungssystem (1) nach Anspruch 2, **dadurch gekennzeichnet, dass** der zumindest eine Auslegerarm (6, 6A) durch den Linearaktor (9) aus der Transportposition in die Umfeldüberwachungsposition und vice versa überführbar ist.

4. Befestigungssystem (1) nach einem der Ansprüche 1 bis 3, **dadurch gekennzeichnet, dass** die Befestigungsstruktur (8) ein am Ende des zumindest einen Auslegerarms (6, 6A) angeordnetes erstes Haltelement (12) aufweist, an welchem ein zweites Halteelement (13) lösbar angeordnet ist, welches der Aufnahme des zumindest einen Sensors (2) dient.

5. Befestigungssystem (1) nach Anspruch 4, **dadurch gekennzeichnet, dass** das erste Halteelement (12) relativ zum zumindest einen Auslegerarm (6, 6A) in horizontaler Richtung verschwenkbar ist und das zweite Halteelement (13) relativ zum ersten Halteelement (12) in vertikaler Richtung verschwenkbar ist.

6. Befestigungssystem (1) nach Anspruch 4 oder 5, **dadurch gekennzeichnet, dass** an dem zweiten Halteelement (13) ein den daran befestigten Sensor (2) umgebenes, im Wesentlichen trichterförmiges Schutzelement (18) angeordnet ist.

7. Befestigungssystem (1) nach Anspruch 6, **dadurch gekennzeichnet, dass** am Fuß (19) des Schutzelementes (18) eine Öffnung ausgebildet ist, in welche eine Düse einsetzbar ist, welche mit einer Druckluftquelle verbindbar ist.

8. Befestigungssystem (1) nach einem der vorangehenden Ansprüche, **dadurch gekennzeichnet, dass** das Tragrahmenelement (5) als eine im Wesentlichen dreieckförmige Konsole (22) ausgebildet ist, welche zumindest zwei Befestigungspunkte (21) zur Anordnung am Anbaugerät (3) und einen Gelenkpunkt (22) zur Anlenkung des zumindest einen Auslegerarms (6, 6A) aufweist.

9. Befestigungssystem (1) nach einem der vorangehenden Ansprüche, **dadurch gekennzeichnet, dass** der zumindest eine Auslegerarm (6A) zweiteilig ausgebildet ist, wobei ein unterer Teil (26) und ein oberer Teil (27) durch ein Knickgelenk (28) miteinander verbunden sind.

10. Befestigungssystem (1) nach Anspruch 9, **dadurch gekennzeichnet, dass** der untere Teil (26) des zumindest einen Auslegerarms (6A) durch einen weiteren Linearaktor (29) mit dem oberen Teil (27) kinematisch gekoppelt ist.

11. Befestigungssystem (1) nach Anspruch 9 oder 10, **dadurch gekennzeichnet, dass** am freien Ende des zweiten Teils (27) des zumindest einen Auslegerarms (6A) zwei Sensoren (2) angeordnet sind.

12. Befestigungssystem (1) nach einem der Ansprüche 9 bis 11, **dadurch gekennzeichnet, dass** das Tragrahmenelement (5) als eine im Wesentlichen U-förmige Konsole (20) ausgebildet ist, wobei zwei zweiteilige Ausleger (6A) einander gegenüberliegend an der Konsole (20) angelenkt sind und durch jeweils ein Dämpfungselement (25) mit der Konsole (20) verbunden sind.

13. Anbaugerät (3), welches zur Grünfutterernte eingerichtet ist, wobei mittels eines Befestigungssystems (1) zumindest ein Sensor (2) an dem Anbaugerät (3) befestigt ist, **dadurch gekennzeichnet, dass** das Befestigungssystem (1) nach einem der Ansprüche 1 bis 12 ausgeführt ist.

14. Kombination aus einer landwirtschaftlichen Arbeitsmaschine und zumindest einem daran angeordneten Anbaugerät (3) zur Grünfutterernte, **dadurch gekennzeichnet, dass** jedem Anbaugerät (3) zumindest ein Sensor (2) zur Erfassung der Umgebung der Kombination zugeordnet ist, wobei der zumindest eine Sensor (2) durch zumindest ein nach einem der Ansprüche 1 bis 12 ausgeführte Befestigungssystem (1) an dem jeweiligen Anbaugerät (3) befestigt ist.

15. Kombination nach Anspruch 14, **dadurch gekennzeichnet, dass** an der Arbeitsmaschine ein Anbaugerät (3) frontseitig und ein Anbaugerät (3) heckseitig angeordnet ist, wobei an dem frontseitigen Anbaugerät (3) ein Sensor (2) mittels des Befestigungssystems (1) angeordnet ist und an dem heckseitigen Anbaugerät (3) zumindest zwei Sensoren (2) mittels eines weiteren Befestigungssystems (1) angeordnet sind.
